# EUROPEAN PATENT APPLICATION

(11) **EP 4 668 828 A1**
(43) Date of publication of application: **24.12.2025**
(21) Application number: 24756178.0
(22) Date of filing: 07.02.2024
(51) Int. Cl.: H04W 24/02

(54) **CONFIGURATION UPDATING METHOD, CONFIGURATION UPDATING APPARATUS, TERMINAL AND NETWORK SIDE DEVICE**

(30) Priority: 14.02.2023 CN 202310124030
(71) Applicant: Vivo Mobile Communication Co., Ltd., Dongguan, Guangdong 523863 (CN)
(72) Inventor: ZHONG, Tingting, Dongguan, Guangdong 523863 (CN); PAN, Xiang, Dongguan, Guangdong 523863 (CN)
(74) Representative: Lavoix
(86) International application number: PCT/CN2024/076496
(87) International publication number: WO 2024/169805

(57) **Abstract**

This application discloses a configuration updating method, a configuration updating apparatus, a terminal, and a network-side device, pertaining to the field of communications technologies. The configuration updating method of embodiments of this application includes: initiating, by a terminal, when a first target configuration is invalid, a radio resource control RRC connection resumption procedure and a corresponding random access channel RACH procedure toward a first network-side device; and obtaining, by the terminal, a valid second target configuration based on the RRC connection resumption procedure and the RACH procedure.

## Description

### CROSS-REFERENCE TO RELATED APPLICATIONS

This application claims priority to Chinese Patent Application No. 202310124030.2, filed in China on February 14, 2023, which is incorporated herein by reference in its entirety.

### TECHNICAL FIELD

This application pertains to the field of communications technologies, and specifically, relates to a configuration updating method, a configuration updating apparatus, a terminal, and a network-side device.

### BACKGROUND

In the related art, for low power and high accuracy positioning (Low Power And High Accuracy Position, LPHAP), an uplink (Uplink, UL) sounding reference signal (Sounding Reference Signal, SRS) area validity is proposed; as a result, an SRS configuration may easily become invalid, for example, user equipment (User Equipment, UE) moves out of a valid area of the SRS configuration, which may cause the UE to be unable to use a valid SRS configuration for positioning.

### SUMMARY

Embodiments of this application provide a configuration updating method, a configuration updating apparatus, a terminal, and a network-side device, so as to provide a specific process of how to update a first target configuration when the first target configuration of UE becomes invalid, so that the UE can obtain an updated valid second target configuration.

According to a first aspect, a configuration updating method is provided, applied to a terminal. The method includes:
initiating, by a terminal, when a first target configuration is invalid, a radio resource control RRC connection resumption procedure and a corresponding random access channel RACH procedure to a first network-side device; and
obtaining, by the terminal, a valid second target configuration based on the RRC connection resumption procedure and the RACH procedure.

According to a second aspect, a configuration updating apparatus is provided, where the apparatus includes:
an initiating module, configured to: when a first target configuration is invalid, initiate a radio resource control RRC connection resumption procedure and a corresponding random access channel RACH procedure to a first network-side device; and
an obtaining module, configured to obtain a valid second target configuration based on the RRC connection resumption procedure and the RACH procedure.

According to a third aspect, a configuration updating method is provided, applied to a network-side device. The method includes:
establishing, by a first network-side device, an RRC connection to a terminal based on a radio resource control RRC connection resumption procedure and a corresponding random access channel RACH procedure that are initiated by the terminal, where a first target configuration of the terminal is invalid; and
sending, by the first network-side device, second information to the terminal, where the second information includes information related to a valid second target configuration.

According to a fourth aspect, a configuration updating apparatus is provided, where the apparatus includes:
a connection establishment module, configured to establish an RRC connection to a terminal based on a radio resource control RRC connection resumption procedure and a corresponding random access channel RACH procedure that are initiated by the terminal, where a first target configuration of the terminal is invalid; and
a first sending module, configured to send second information to the terminal, where the second information includes information related to a valid second target configuration.

According to a fifth aspect, a configuration updating method is provided, applied to an LMF. The method includes:
receiving, by an LMF, first information from a terminal or a first network-side device, where the first information carries an indication or request for target configuration update, and a first target configuration of the terminal is invalid; and
sending, by the LMF, second information to the first network-side device, where the second information includes information related to a valid second target configuration.

According to a sixth aspect, a configuration updating apparatus is provided, where the apparatus includes:
a first receiving module, configured to receive first information from a terminal or a first network-side device, where the first information carries an indication or request for target configuration update, and a first target configuration of the terminal is invalid; and
a second sending module, configured to send second information to the first network-side device, where the second information includes information related to a valid second target configuration.

According to a seventh aspect, a terminal is provided, where the terminal includes a processor and a memory, where a program or instructions capable of running on the processor are stored in the memory. When the program or the instructions are executed by the processor, the steps of the method according to the first aspect are implemented.

According to an eighth aspect, a terminal is provided, including a processor and a communication interface, where the processor is configured to: when a first target configuration is invalid, initiate a radio resource control RRC connection resumption procedure and a corresponding random access channel RACH procedure to a first network-side device; and the communication interface is configured to obtain a valid second target configuration based on the RRC connection resumption procedure and the RACH procedure.

According to a ninth aspect, a network-side device is provided, where the network-side device includes a processor and a memory, where a program or instructions capable of running on the processor are stored in the memory. When the program or the instructions are executed by the processor, the steps of the method according to the third aspect or the fifth aspect are implemented.

According to a tenth aspect, a network-side device is provided, including a processor and a communication interface, where
when the network-side device is a first network-side device, the communication interface is configured to establish an RRC connection to a terminal based on a radio resource control RRC connection resumption procedure and a corresponding random access channel RACH procedure that are initiated by the terminal, where a first target configuration of the terminal is invalid; and the communication interface is further configured to send second information to the terminal, where the second information includes information related to a valid second target configuration;
   or
when the network-side device is an LMF, the communication interface is configured to receive first information from a terminal or a first network-side device, where the first information carries an indication or request for target configuration update, and a first target configuration of the terminal is invalid; and the communication interface is further configured to send second information to the first network-side device, where the second information includes information related to a valid second target configuration.

According to an eleventh aspect, a communication system is provided, including a terminal and a network-side device, where the terminal can be configured to execute the steps of the configuration updating method according to the first aspect; and the network-side device can be configured to execute the steps of the configuration updating method according to the third aspect or the fifth aspect.

According to a twelfth aspect, a readable storage medium is provided, where a program or instructions are stored in the readable storage medium. When the program or the instructions are executed by a processor, the steps of the method according to the first aspect, the third aspect, or the fifth aspect are implemented.

According to a thirteenth aspect, a chip is provided, where the chip includes a processor and a communication interface, the communication interface is coupled to the processor, and the processor is configured to run a program or instructions to implement the method according to the first aspect, the third aspect, or the fifth aspect.

According to a fourteenth aspect, a computer program/program product is provided, where the computer program/program product is stored in a storage medium, and the computer program/program product is executed by at least one processor to implement the steps of the method according to the first aspect, the third aspect, or the fifth aspect.

In the embodiments of this application, when the first target configuration is invalid, the terminal initiates a radio resource control RRC connection resumption procedure and a corresponding random access channel RACH procedure to the first network-side device; and the terminal obtains a valid second target configuration based on the RRC connection resumption procedure and the RACH procedure. In this way, the terminal can obtain an updated configuration through signaling interaction in the RRC connection resumption procedure and the RACH procedure, so that the terminal can obtain a valid configuration in a timely manner for positioning.

### BRIEF DESCRIPTION OF DRAWINGS

FIG. 1 is a schematic structural diagram of a wireless communication system to which embodiments of this application are applicable;
FIG. 2 is a schematic diagram of an interaction procedure for uplink positioning;
FIG. 3 is a first schematic diagram of an interaction procedure for UE triggering from an RRC inactive state to an RRC connected state;
FIG. 4 is a second schematic diagram of an interaction procedure for UE triggering from an RRC inactive state to an RRC connected state;
FIG. 5 is a flowchart of a configuration updating method executed by a terminal according to an embodiment of this application;
FIG. 6 is a flowchart of a configuration updating method executed by a first network-side device according to an embodiment of this application;
FIG. 7 is a flowchart of a configuration updating method executed by an LMF according to an embodiment of this application;
FIG. 8 is a schematic diagram of an interaction procedure for a configuration updating method according to an embodiment of this application;
FIG. 9 is a schematic structural diagram of a configuration updating apparatus according to an embodiment of this application;
FIG. 10 is a schematic structural diagram of another configuration updating apparatus according to an embodiment of this application;
FIG. 11 is a schematic structural diagram of another configuration updating apparatus according to an embodiment of this application;
FIG. 12 is a schematic structural diagram of a communication device according to an embodiment of this application;
FIG. 13 is a schematic structural diagram of a hardware structure of a terminal according to an embodiment of this application;
FIG. 14 is a schematic structural diagram of a network-side device according to an embodiment of this application; and
FIG. 15 is a schematic structural diagram of another network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally represents an "or" relationship between the associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6th Generation, 6G) communication system.

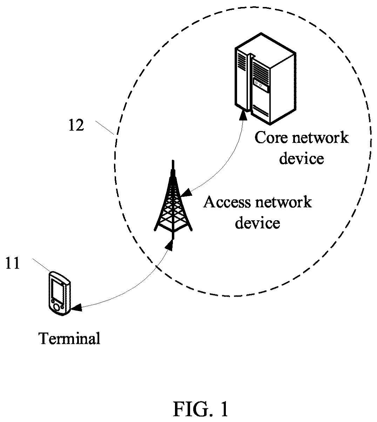

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that a specific type of the terminal 11 is not limited in the embodiments of this application. The network-side device 12 may include an access network device or a core network device, where the access network device may also be referred to as a radio access network (Radio Access Network, RAN), a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (NodeB, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

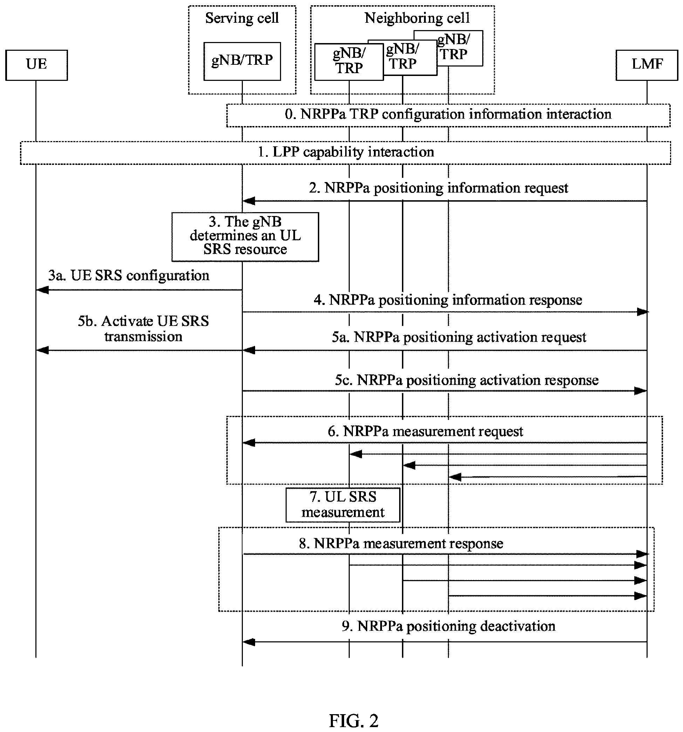

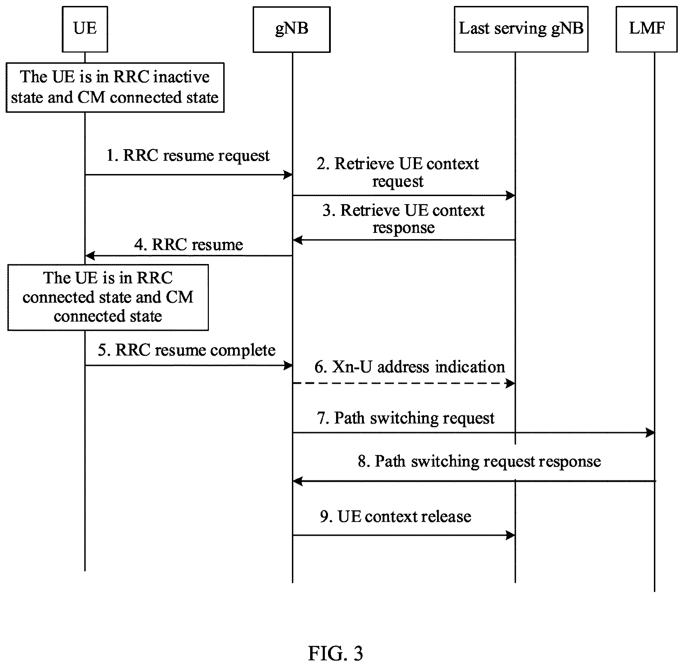

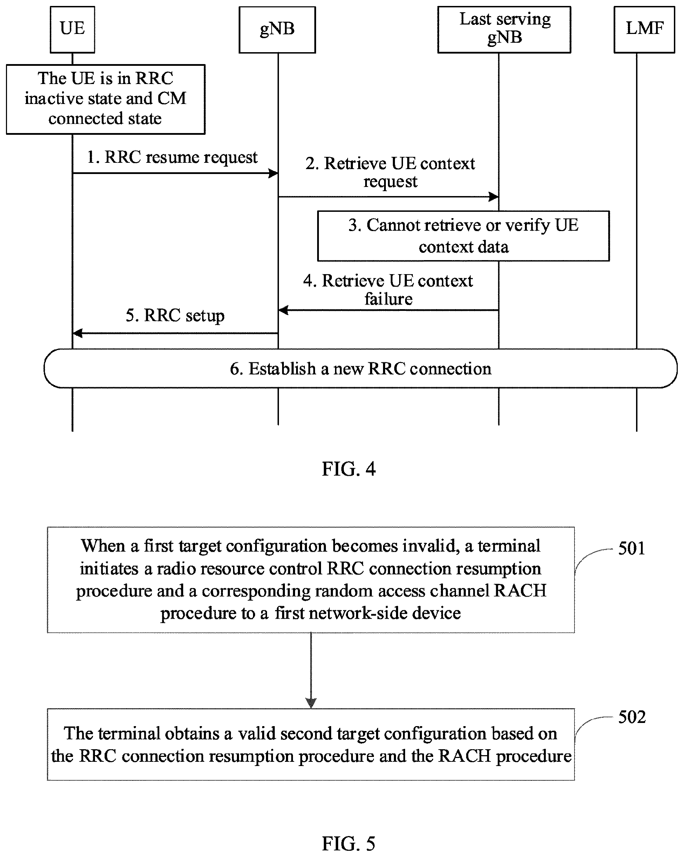

To facilitate understanding on the configuration updating method in the embodiments of this application, the following procedures in related technologies are described:
I. Uplink positioning procedure
   As shown in FIG. 2, the uplink positioning procedure may include the following steps.
   0. A location management function (Location Management Function, LMF) obtains TRP information.
   1. The LMF obtains a positioning capability of user equipment (User Equipment, UE).
   2. The LMF sends an NR positioning protocol A (New Radio Positioning Protocol annex, NRPPa) message POSITIONING INFORMATION REQUEST to a serving base station, requesting sounding reference signal (Sounding Reference Signal, SRS) configuration information of target UE.
   3. The serving base station determines an SRS configuration and sends the SRS configuration to the target UE.
   4. The serving base station sends the SRS configuration to the LMF through an NRPPa message POSITIONING INFORMATION RESPONSE.
   5. For a semi-persistent (semi-persistent) or aperiodic (aperiodic) SRS, the LMF requests the serving base station to activate an SRS configuration through an NRPPa message Positioning Activation Request. The SRS configuration is activated for the SRS through a medium access control element (Medium Access Control Control Element, MAC CE) or downlink control information (Downlink Control Information, DCI). After activation, the serving base station feeds back an NRPPa message NRPPA Positioning Activation Response to confirm that the SRS has been activated.
   6. The LMF sends the SRS configuration to a related base station through an NRPPa message MEASUREMENT REQUEST, and requests the related base station to perform SRS measurement based on the configuration.
   7. The related base station performs SRS measurement based on the configuration.
   8. The related base station feeds back an SRS measurement result through an NRPPa message Measurement Response.
   9. The LMF sends an NRPPa message POSITIONING DEACTIVATION to a serving cell to deactivate the SRS.
II. The UE triggers a transition process from a radio resource control (Radio Resource Control, RRC) inactive state (RRC_INACTIVE) to RRC_CONNECTED.
   In an implementation, as shown in FIG. 3, the transition process from RRC_INACTIVE to RRC_CONNECTED triggered by the UE may include the following steps.
   1. The UE resumes the RRC connected state from RRC_INACTIVE, and provides an inactive radio network temporary identifier (Inactive Radio Network Temporary Identifier, I-RNTI) allocated by the last serving gNB.
   2. If the gNB can parse out a gNB identifier contained in the I-RNTI, it requests the last serving gNB to provide UE context data.
   3. The last serving gNB provides the UE context data.
   4/5. The gNB and the UE complete resumption of the RRC connection (note: user data may alternatively be sent in step 5 if permitted).
   6. If loss of downlink (Downlink, DL) user data buffered in the last serving gNB needs to be prevented, the gNB provides a forwarding address.
   7/8. The gNB performs path switching.
   9. The gNB triggers release of resources between the UE and the last serving gNB.
      In another implementation, as shown in FIG. 4, the transition process from RRC_INACTIVE to RRC_CONNECTED triggered by the UE may include the following steps.
      1. The UE resumes from RRC_INACTIVE and provides I-RNTI allocated by the last serving gNB.
      2. If the gNB can parse out a gNB identifier contained in the I-RNTI, it requests the last serving gNB to provide UE context data.
      3. The last serving gNB cannot retrieve or verify the UE context data.
      4. The last serving gNB indicates a failure to the gNB.
      5. The gNB performs a fallback by sending an RRCSetup (RRCSetup) to establish a new RRC connection.
      6. A new RRC connection is established as per the protocol.
III. Low power and high accuracy positioning (Low Power and High Accuracy Position, LPHAP) in related technologies

The system architecture (SA1) has introduced use cases and requirements for LPHAP in industrial Internet of things scenarios. LPHAP is an indispensable part in many industrial applications. Example target applications for LPHAP include asset tracking, vehicle tracking, and tool tracking in process automation. Table 1 below provides requirements for various LPHAP use cases.

**Table 1: LPHAP use cases**

| Use case number | Horizontal accuracy (horizontal accuracy) | Corresponding service level (Corresponding service level)(22.261) | Positioning interval/duty cycle (positioning interval/duty cycle) | Battery life time/minimum operation time (battery life time/ minimum operation time) |
|---|---|---|---|---|
| 1 | 10 m | Service level 1 | On demand | 24 months |
| 2 | 2 m to 3 m | Service level 2 | < 4 seconds | > 6 months |
| 3 | < 1 m | Service level 3 | No indication | 1 work shift -8 hours (max. 3 days, inventory for 1 month) |
| 4 | < 1 m | Service level 3 | 1 second | 6-8 years |
| 5 | < 1 m | Service level 3 | 5 seconds to 15 minutes | 18 months |
| 6 | < 1 m | Service level 3 | 15 seconds to 30 seconds | 6-12 months |
| 7 | 30 cm | Service level 5 | 250 milliseconds | 18 months |
| 8 | 30 cm | Service level 5 | 1 second | 6-8 years (no strong battery size restrictions) |
| 9 | 10m | Service level 1 | 20 minutes | 12 years (@20mJ/fixed position) |

Examples of the use cases in Table 1 above are as follows:
1. Process automation: car tracking (outdoor).
2. Process automation: asset tracking.
3. Flexible modular assembly area: tool tracking in a flexible modular assembly area in a smart factory.
4. Process automation: sequential containers (internal logistics).
5. Process automation: palette tracking (for example, in turbine construction).
6. Flexible modular assembly area: tracking workpieces in assembly areas and warehouses (indoor and outdoor).
7. Flexible modular assembly area: tool allocation in a flexible modular assembly area in a smart factory (tools are allocated to vehicles in the production line, left/right).
8. Flexible modular assembly area: positioning of autonomous vehicles for monitoring (vehicles aligned in a row, 1.5 meters apart).
9. (Internal) logistics: asset tracking.

In the related art, for the LPHAP issue, a standard direction has been proposed that an uplink (Uplink, UL) SRS is valid within a specific area, meaning an SRS configuration of the UE is valid within one area. As a result, an SRS configuration may easily become invalid, for example, user equipment (User Equipment, UE) moves out of a valid area of the SRS configuration, which may cause the UE to be unable to use a valid SRS configuration for positioning.

However, in the embodiments of this application, when the first target configuration is invalid, the terminal may initiate an RRC connection resumption procedure and a corresponding random access channel (Random Access Channel, RACH) procedure, so as to obtain a valid second target configuration based on the RRC connection resumption procedure and the RACH procedure. In this way, when a first target configuration and a second target configuration are SRS configurations, the terminal can obtain a valid SRS configuration and use the valid SRS configuration for positioning.

It should be noted that the first target configuration and the second target configuration in the embodiments of this application can alternatively be other configurations than the SRS configuration, such as positioning reference signal (Positioning Reference Signal, PRS). For ease of description, the first target configuration and the second target configuration being SRS configurations are used as an example for description in the embodiments of this application, which are not specifically limited here.

The following specifically describes the configuration updating method, the configuration updating apparatus, the terminal, and the network-side device provided in the embodiments of this application through specific embodiments and application scenarios thereof with reference to the accompanying drawings.

Refer to FIG. 5. A configuration updating method is provided in an embodiment of this application, and may be executed by a terminal. The terminal may include, but is not limited to, various types of terminals listed in the embodiment shown in FIG. 1.

As shown in FIG. 5, the configuration updating method executed by the terminal may include the following steps.

Step 501: When a first target configuration is invalid, the terminal initiates a radio resource control RRC connection resumption procedure and a corresponding random access channel RACH procedure to a first network-side device.

In an implementation, the first network-side device may be a base station, for example, a base station to which the terminal is connected after the RRC connection resumption procedure. For ease of description, in this embodiment of this application, the first network-side device is referred to as a new base station (new gNB).

In some embodiments, a case of the first target configuration becoming invalid may include a case that the terminal reselects out of the positioning validity area during SRS transmission (UE reselects out of the positioning validity area during SRS transmission), or a case that the terminal is located out of the positioning validity area during SRS transmission.

In some embodiments, initiating the radio resource control RRC connection resumption procedure and the corresponding random access channel RACH procedure to the first network-side device may include the terminal sending an RRC message to the network-side device, where the RRC message is used to request an SRS configuration.

Optionally, the RRC message is an SRS configuration request message, and the SRS configuration request message may be sent through an RRCResumeRequest message.

Optionally, the RRCResumeRequest message may carry a resume cause (resume cause).

Step 502: The terminal obtains a valid second target configuration based on the RRC connection resumption procedure and the RACH procedure.

In an implementation, the terminal obtaining a valid second target configuration based on the RRC connection resumption procedure and the RACH procedure may be: when the terminal establishes an RRC connected state with the first network-side device based on the RRC connection resumption procedure and the RACH procedure, the terminal requests a valid second target configuration from the first network-side device or an LMF in the RRC connected state.

Optionally, the LMF may be a location management function network element in the core network or the access network. For ease of description, in this embodiment of this application, the LMF being a location management function network element in the core network is used as an example for description in this embodiment of this application, which is not specifically limited here.

In an implementation, the terminal obtaining a valid second target configuration based on the RRC connection resumption procedure and the RACH procedure may be: during the RRC connection resumption procedure and the RACH procedure, through signaling interaction between the new base station, an old base station (namely, the last serving base station of the terminal) of the terminal, and the LMF, the new base station determines a second target configuration and sends it to the terminal. For example, the base station obtains UE context information from a previous serving base station of the UE, determines the second target configuration information based on the UE context information, and sends the second target configuration information to the UE.

As an optional implementation, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

In an implementation, the signal sent by the terminal in the RRC inactive state may include an SRS signal, a PRS signal, or the like. For example, the first target signal and the second target signal are SRS signals.

In some embodiments, the configuration valid in the first area may be an SRS valid area configuration.

Optionally, the SRS valid area configuration may include a cell list, and the cell list is used to indicate in which cell or cells the SRS is valid.

In an implementation, when configuration information of a signal sent by the terminal in the RRC inactive state becomes invalid, the terminal may initiate the RRC connection resumption procedure and the corresponding RACH procedure to enter the RRC connected state. In this case, the terminal may interact with the network-side device in the RRC connected state to obtain the second target configuration, or the first network-side device may determine the second target configuration based on the UE context information interaction during the RRC connection resumption procedure and the corresponding RACH procedure, and the terminal may receive a suspend configuration (SuspendConfig) in an RRCRelease message from the first network-side device, indicating the second target configuration.

In an implementation, the first area and the second area may be different areas. For example, when the first target configuration is valid in the first area, if the terminal is not included in the first area and the first target configuration becomes invalid, a first target configuration valid in an area in which the terminal is located may be configured for the terminal.

In an implementation, the first area and the second area may be a same area. For example, when the first target configuration is a configuration valid in the first area, when the terminal is in the first area and the first target configuration becomes invalid due to a specific event or invalidity of a parameter such as spatial relation (spatial relation), the first target configuration may be made valid again by eliminating the specific event or updating the parameter such as spatial relation.

As an optional implementation, the first target configuration is a first SRS configuration valid in the first area, and that the first target configuration becomes invalid includes any one of the following:
the terminal is not included in the first area; and
a first event occurs on the terminal within the first area, where the first event is an event that occurs when the terminal is within the first area and causes the first SRS configuration to become invalid.

For example, the first event includes at least one of the following:
determining that a spatial relation (spatial relation) parameter for an SRS is invalid;
determining that a power control (power control) parameter for the SRS is invalid;
determining that a timing advance (timing advance, TA) or transmission timing (timing) for the SRS is invalid; and
determining that an initial (initial) uplink bandwidth part (Uplink Bandwidth Part, UL BWP) or bearer (such as a component carrier (Component Carrier, CC) or a serving cell (serving cell) in which the initial BWP is located) in a first cell mismatches the first SRS configuration, where the first cell is a cell reselected by the terminal within the first area.

In an implementation, when a first event occurs on the terminal within the first area, the terminal may request a new SRS configuration from the network-side device in the RRC connected state to eliminate the first event based on the new SRS configuration.

In an implementation, when a first event occurs on the terminal within the first area, if the first event is an event in which a specific parameter becomes invalid, the terminal can interact with the base station in the RRC connection resumption procedure and the corresponding RACH procedure to update the invalid specific parameter. For example, when the SRS configuration becomes invalid due to an invalid TA of the SRS, the base station may configure a valid TA to resume validity of the SRS configuration, without updating the SRS configuration.

Optionally, when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration includes at least one of the following:
determining that the SRS exceeds a range of the initial UL BWP of the first cell; and
determining that the parameter set of the SRS is different from that of the initial UL BWP of the first cell.

Optionally, when the terminal has a capability to support SRS transmission within the initial UL BWP and SRS transmission outside the initial UL BWP, the determining that an initial uplink bandwidth part UL BWP or bearer in a first cell mismatches the first SRS configuration includes at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to include bandwidths of control resource set (Control resource set, CORESET) #0 and synchronization signal and physical broadcast channel block (Synchronization Signal and PBCH block, SSB), but the frequency domain range of the SRS after cell reselection does not include the bandwidths of CORESET #0 and SSB.

Optionally, the determining that an initial uplink bandwidth part UL BWP or bearer in a first cell mismatches the first SRS configuration includes:
determining that the first cell and a second cell are inter-frequency cells, where the first cell is a cell reselected by the terminal within the first area, and the second cell is an original cell of the terminal before cell reselection within the first area.

As an optional implementation, an initiation condition for the RRC connection resumption procedure is an access stratum (Access Stratum, AS) initiation condition, and the AS initiation condition includes at least one of the following:
a mobile-originated (Mobile Originated, MO) signaling transmission occurring at the RRC layer; and
update of the first target configuration.

It should be noted that the initiation condition of the RRC connection resumption procedure may further include an initiation condition in the related technologies, for example, being triggered by an upper layer trigger (upper layers trigger), where in this case, the RRC layer may send an indication to the upper layer.

As an optional implementation, the RRC connection resumption procedure is initiated based on an RRC resume request (RRCResumeRequest) message, and a resume cause (ResumeCause) carried in the RRC resume request message includes at least one of the following:
update of the first target configuration; and
a cause for invalidity of the first target configuration.

It should be noted that ResumeCause in the RRCResumeRequest message can also reuse ResumeCause in the related technologies, such as MO signal indication (MO-Signalling).

The cause for invalidity of the first target configuration may indicate why the first target configuration becomes invalid. For example, a cause for invalidity of an SRS configuration valid in an area may include at least one of the following: the UE moves out of a valid area of the SRS configuration, the UE is within the valid area of the SRS configuration and a first event occurs, the spatial relation parameter of the SRS is no longer valid, and the like.

As an optional implementation, an initiation condition for the RACH procedure includes at least one of the following:
a positioning purpose during a non-RRC connected state requires a random access procedure.

For example, when the first target configuration is a signal configuration for positioning, the terminal requires a random access procedure for positioning purposes during the RRC inactive state, specifically, when UE positioning requires update of the SRS configuration.

It should be noted that the initiation condition for the RACH procedure may alternatively be an initiation condition in the related technologies, for example, the initiation condition for the RACH procedure includes initiating a resumption procedure from the RRC inactive state to the RRC connected state.

As an optional implementation, the initiating, by a terminal, when a first target configuration is invalid, a radio resource control RRC connection resumption procedure and a corresponding random access channel RACH procedure includes:
sending, by the terminal, an RRC resume request message to the first network-side device when the first target configuration is invalid; and
entering, by the terminal, an RRC connected state based on a response message to the RRC resume request message; and
the obtaining, by the terminal, a valid second target configuration based on the RRC connection resumption procedure and the RACH procedure includes:
   sending, by the terminal, first information in the RRC connected state, where the first information carries an indication or request for target configuration update.

In this implementation, through the first information carrying a target configuration update indication or request, the terminal can request or indicate to the base station or the LMF to update the first target configuration, so that the terminal obtains the updated second target configuration.

Optionally, the first information is carried in at least one of the following messages:
a first RRC message that is sent by the terminal to the first network-side device; and
a first long term evolution positioning protocol LPP message that is sent by the terminal to a location management function LMF.

In an implementation, the terminal can send, in the RRC connected state, a first RRC message to the first network-side device, that is, the new base station, where the first RRC message carries the first information. In this case, for updates related to the SRS configuration under the base station itself (such as the cause for invalidity of the SRS configuration is at the cell (cell) level), the new base station can update the SRS configuration, include the updated SRS configuration in the RRCRelease with SuspendConfig message, and send it to the terminal.

In an implementation, the terminal can send, in the RRC connected state, a first RRC message to the first network-side device, that is, the new base station, where the first RRC message carries the first information. In this case, the base station can forward the first information to the LMF through an NRPPa message, so that after updating the SRS configuration, the LMF can send the updated SRS configuration to the new base station or the terminal, or provide the new base station with positioning related information for determining the updated SRS configuration, so that the new base station can determine the updated SRS configuration accordingly and send it to the terminal.

Optionally, the first RRC message includes at least one of the following:
an enhanced RRC message, such as enhancement of RRCSetupComplete messages and UEAssistanceInformation messages in related technologies; and
a newly defined RRC message, where the newly defined RRC message may be an RRC message not defined in the communication protocol in the related technologies, and the newly defined RRC message may be used to transmit the first information, for example, a newly defined SRS configuration update request message.

Optionally, the NRPPa message carrying the first information includes at least one of the following:
an enhanced NRPPa message, such as enhancement of the existing POSITIONING INFORMATION UPDATE message, ASSISTANCE INFORMATION FEEDBACK message, and the like; and
a newly defined NRPPa message, where the newly defined NRPPa message may be an NRPPa message not defined in the communication protocol in the related technologies, and the newly defined NRPPa message may be used to transmit the first information.

In an implementation, the terminal may send a first long term evolution positioning protocol (Long Term Evolution Positioning Protocol, LPP) message to the LMF in the RRC connected state, where the first LPP message carries the first information. In this way, the LMF can update the SRS configuration based on the first information and send the updated SRS configuration to the terminal or the base station.

Optionally, the first LPP message includes at least one of the following:
an enhanced LPP message, such as enhancement of ProvideLocationInformation message, RequestAssistanceData message, ProvideCapabilities message, and the like in related technologies; and
a newly defined LPP message, where the newly defined LPP message may be an LPP message not defined in the communication protocol in the related technologies, and the newly defined LPP message may be used to transmit the first information.

In an implementation, the target configuration update indication or request includes:
a cause for invalidity of the first target configuration.

The cause for invalidity of the first target configuration may include: the terminal moves out of the valid area of the first target configuration, or the first event occurs to cause invalidity of the first target configuration.

In this implementation, the target configuration update indication or request sent by the terminal to the base station or the LMF includes the cause for invalidity of the first target configuration, so that the base station or the LMF can determine how to update the first target configuration based on the cause for invalidity of the first target configuration, for example, whether to update the valid area of the first target configuration or update the specific content of the first target configuration.

As an optional implementation, the obtaining, by the terminal, a valid second target configuration based on the RRC connection resumption procedure and the RACH procedure includes:
receiving, by the terminal, information related to the second target configuration from the first network-side device based on the RRC connection resumption procedure and the RACH procedure, where the information related to the second target configuration includes at least one of the following:
a valid area of the second target configuration; and
the second target configuration.

In an implementation, in the RRC connection resumption procedure and the RACH procedure, the first network-side device, namely the new base station, can obtain context information of the terminal from the last serving base station (also referred to as the old base station) of the terminal. In this case, the new base station can determine an updated second target configuration based on the context information, or based on the context information through interaction with the LMF, and send to the terminal information related to the second target configuration, such as a valid area of the updated SRS configuration or specific content of the updated SRS configuration.

Optionally, when the first target configuration is a first SRS configuration that is valid in the first area, the context information of the terminal may include at least one of the following:
a valid area of the first SRS configuration (for example, not an access network notification area (RAN-based Notification Area, RNA));
the first SRS configuration;
a positioning mode being uplink positioning;
a state of the terminal during positioning, such as RRC-INACTIVE state;
a positioning requirement, such as LPHAP; and
a positioning period, such as: 15s to 30s.

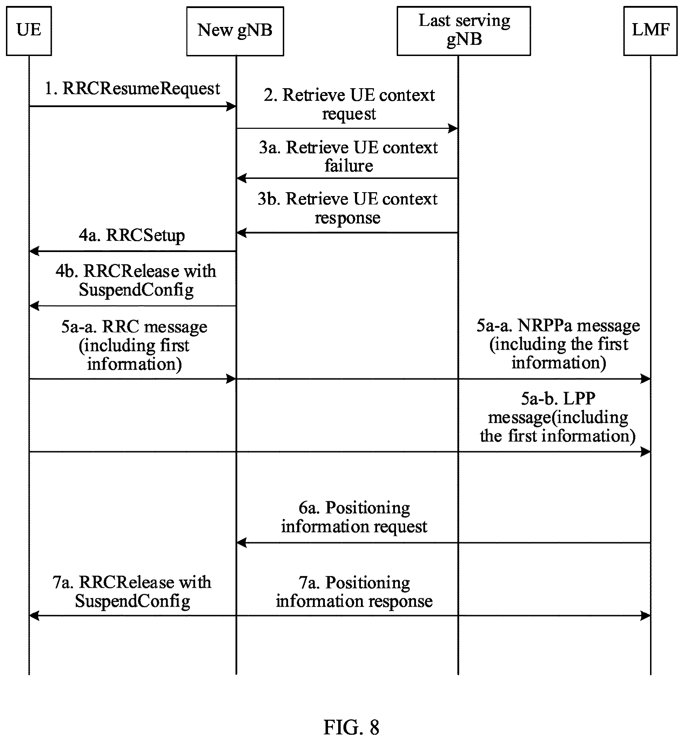

For example, as shown in FIG. 8, assuming that this embodiment of this application is used for update of the SRS configuration, the updating procedure of the SRS configuration may include the following steps:
1. The UE sends an RRC connection resume request message to the new base station.
2. After the new base station receives the RRC connection resume request message sent by the UE, the new base station sends a RETRIEVE UE CONTEXT REQUEST message to the last serving base station of the UE to request the UE context (context) information of the UE.
3b. After the old base station receives the RETRIEVE UE CONTEXT REQUEST message sent by the new base station, when the old base station can retrieve and verify the UE context data and determines to provide the UE context to the new base station, it can send a RETRIEVE UE CONTEXT RESPONSE message to the new base station, where the RETRIEVE UE CONTEXT RESPONSE message contains the UE context.
4b. The new base station determines an updated SRS configuration based on positioning-related content in the UE context, and sends an RRCRelease with SuspendConfig message with the updated SRS configuration to the UE.

In an implementation, when the second target configuration is an SRS configuration, the information related to the SRS configuration may be carried in the RRCRelease with SuspendConfig message, so that the terminal can enter the RRC inactive state based on the RRCRelease with SuspendConfig message, and perform positioning in the RRC inactive state based on the information related to SRS configuration carried in the RRCRelease with SuspendConfig message.

In an implementation, if the new base station fails to obtain the context information of the terminal from the last serving base station of the terminal during the RRC connection resumption procedure and the RACH procedure, the new base station may send an RRCSetup message to the terminal to establish an RRC connected state between the terminal and the new base station, and the terminal in the RRC connected state may request or indicate to the new base station or the LMF to update the first target configuration.

For example, as shown in FIG. 8, assuming that this embodiment of this application is used for update of the SRS configuration, the updating procedure of the SRS configuration may include the following steps:
1. The UE sends an RRC connection resume request message to the new base station.
2. After the new base station receives the RRC connection resume request message sent by the UE, the new base station sends a RETRIEVE UE CONTEXT REQUEST message to the last serving base station of the UE to request the UE context (context) information of the UE.
3a. After the old base station receives the RETRIEVE UE CONTEXT REQUEST message sent by the new base station, when the old base station cannot retrieve or verify the UE context data or determines not to provide the UE context to the new base station, it may send a RETRIEVE UE CONTEXT FAILURE message to the new base station, where the RETRIEVE UE CONTEXT FAILURE does not include the UE context.
4a. The new base station sends an RRCSetup message not carrying the updated SRS configuration to the UE.
5a. The UE enters the RRC connected state and sends the first information carrying the SRS configuration update indication or request. For example, the UE sends a first RRC message containing the first information to the base station, so that the base station can update the SRS configuration accordingly or request or indicate to the LMF to update the SRS configuration; or the UE may directly send a first LPP message containing the first information to the LMF, so that the LMF can update the SRS configuration accordingly.

It should be noted that in this step, when the base station updates the SRS configuration, the base station may send the updated SRS configuration to the UE and report the updated SRS configuration to the LMF.

6a. After receiving the message of step 5a (such as the LPP message sent by the UE or the NRPPa message sent by the base station), the LMF sends a POSITIONING INFORMATION REQUEST message to the base station based on related information of the UE (such as a LPHAP requirement, UE capability, or a previous SRS configuration of the UE).

The "POSITIONING INFORMATION REQUEST message" includes at least one of the following:
information related to the SRS configuration; and
positioning related information.

The positioning related information may include at least one of the following:
uplink positioning;
a state of the UE during positioning; and
a positioning requirement (such as LPHAP), where the requirement is used to suggest that the base station release the UE to RRC_INACTIVE state.

7a. After receiving the message of step 6a, the base station determines the updated SRS configuration of the UE, sends information related to the updated SRS configuration to the UE, and sends a POSITIONING INFORMATION RESPONSE message carrying UL information to the LMF, where the POSITIONING INFORMATION RESPONSE message may carry the information related to the updated SRS configuration.

Optionally, in the above step 7a, the sending the updated SRS configuration related information to the UE by the base station may include:
the base station indicates information related to the updated SRS configuration to the UE in the SuspendConfig in the RRCRelease message.

In the embodiments of this application, when the first target configuration is invalid, the terminal initiates a radio resource control RRC connection resumption procedure and a corresponding random access channel RACH procedure to the first network-side device; and the terminal obtains a valid second target configuration based on the RRC connection resumption procedure and the RACH procedure. In this way, in the scenario of updating the SRS configuration, the terminal can obtain a base station-updated SRS configuration through signaling interaction in the RRC connection resumption procedure and the RACH procedure, so that the terminal can obtain a valid SRS configuration in a timely manner for positioning.

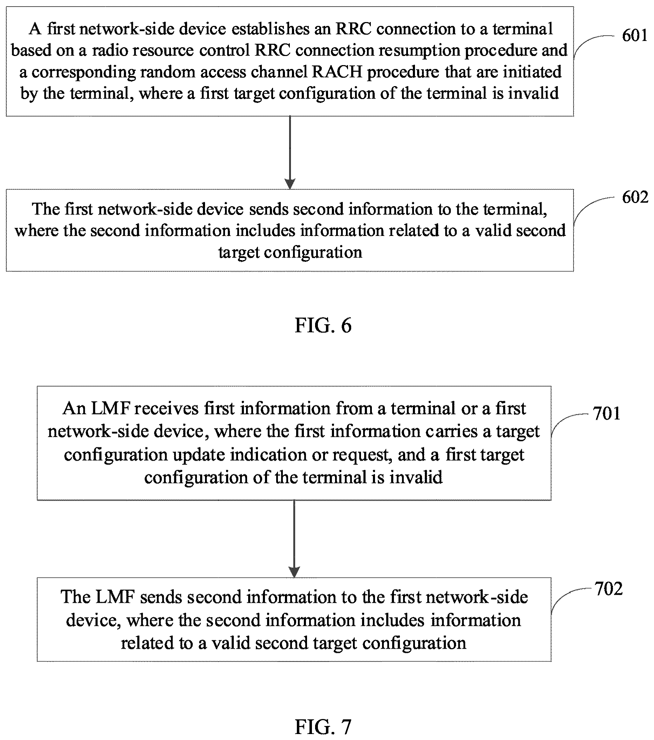

Refer to FIG. 6. A configuration updating method is provided in an embodiment of this application, and may be executed by a first network-side device. The first network-side device may be a base station accessed by a terminal by initiating an RRC connection resumption procedure.

As shown in FIG. 6, the configuration updating method executed by the first network-side device may include the following steps.

Step 601: The first network-side device establishes an RRC connection to a terminal based on a radio resource control RRC connection resumption procedure and a corresponding random access channel RACH procedure that are initiated by the terminal, where a first target configuration of the terminal is invalid.

Step 602: The first network-side device sends second information to the terminal, where the second information includes information related to a valid second target configuration.

The RRC connection resumption procedure and the corresponding RACH procedure, the first target configuration, and the information related to the second target configuration in this embodiment of this application have the same meanings and functions as he RRC connection resumption procedure and the corresponding RACH procedure, the first target configuration, and the information related to the second target configuration in the method embodiment shown in FIG. 5, which are not repeated here.

As an optional implementation, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

As an optional implementation, the first target configuration is a first SRS configuration valid in the first area, and that the first target configuration becomes invalid includes any one of the following:
the terminal is not included in the first area; and
a first event occurs on the terminal within the first area, where the first event is an event that occurs when the terminal is within the first area and causes the first SRS configuration to become invalid.

As an optional implementation, the first event includes at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, where the first cell is a cell reselected by the terminal within the first area.

As an optional implementation, when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration includes at least one of the following:
determining that the SRS exceeds a range of the initial UL BWP of the first cell; and
determining that the parameter set of the SRS is different from that of the initial UL BWP of the first cell.

As an optional implementation, when the terminal has a capability to support SRS transmission within the initial UL BWP and SRS transmission outside the initial UL BWP, the determining that an initial uplink bandwidth part UL BWP or bearer in a first cell mismatches the first SRS configuration includes at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to include bandwidths of control resource set CORESET #0 and synchronization signal and physical broadcast channel block SSB, but the frequency domain range of the SRS after cell reselection does not include the bandwidths of CORESET #0 and SSB.

As an optional implementation, the determining that an initial uplink bandwidth part UL BWP or bearer in a first cell mismatches the first SRS configuration includes:
determining that the first cell and a second cell are inter-frequency cells, where the first cell is a cell reselected by the terminal within the first area, and the second cell is an original cell of the terminal before cell reselection within the first area.

As an optional implementation, the RRC connection resumption procedure is initiated based on an RRC resume request message, and a resume cause carried in the RRC resume request message includes at least one of the following:
update of the first target configuration; and
a cause for invalidity of the first target configuration.

As an optional implementation, the method further includes:
when the first network-side device obtains context information of the terminal from a second network-side device during the RRC connection resumption procedure initiated by the terminal, determining, by the first network-side device, an updated second target configuration based on the context information of the terminal, where the second information includes the updated second target configuration.

In an implementation, the second network-side device may be the last serving base station of the terminal before initiating the RRC connection resumption procedure, that is, the first network-side device may be a new base station accessed by the terminal by initiating the RRC connection resumption procedure, and the second network-side device is an old base station.

In an optional implementation, the method further includes:
when the first network-side device has not obtained context information of the terminal during the RRC connection resumption procedure initiated by the terminal, sending, by the first network-side device, an RRC resume request message to the terminal.

The RRC resume request message is used to resume an RRC connected state of the terminal, so that the terminal in the RRC connected state sends first information to the first network-side device or an LMF, where the first information carries an indication or request for target configuration update.

As an optional implementation, when the first network-side device receives the first information from the terminal;
the first network-side device performs at least one of the following based on the first information:
determining the second information, where a response message to the first information carries the second information; and
sending the first information to the LMF.

In an implementation, when the second information can be determined only by the first network-side device, the first network-side device determines the second information based on the first information.

Optionally, the response message to the first information may be an RRC Release message, and the second information may be sent to the terminal through Suspend Config carried in this message.

In an implementation, when the first network-side device cannot determine the second information based on the first information, the first network-side device sends the first information to the LMF, so that the LMF can determine the second information based on the received first information or send terminal positioning related information to the first network-side device. If the LMF determines the second information based on the received first information, the LMF sends the second information to the terminal through the first network-side device. If the LMF sends the terminal positioning related information to the first network-side device based on the received first information, the first network-side device determines the second information based on the terminal positioning related information and sends it to the terminal.

Optionally, the first information sent by the first network-side device to the LMF may be carried in an NRPPa message, where the NRPPa message may be an enhanced NRPPa message in the related art or a newly defined NRPPa message.

As an optional implementation, the target configuration update indication or request includes:
a cause for invalidity of the first target configuration.

As an optional implementation, the first information is carried in a first RRC message from the terminal.

Optionally, the first RRC message includes at least one of the following:
an enhanced RRC message; and
a newly defined RRC message.

The first RRC message has the same meaning and function as the first RRC message in the method embodiment shown in FIG. 5, which is not repeated here.

It should be noted that, in another optional implementation, the terminal can send the first information to the LMF through a first LPP message. In this case, the LMF may send a first request to the first network-side device based on the first information, where the first request may carry the information related to the second target configuration or the terminal positioning related information, so that the first network-side device can determine the second target configuration based on the first request, send the second information to the terminal, and feed back a first response to the LMF, where the first response may carry the second information.

The first LPP message has the same meaning and function as the first LPP message in the method embodiment shown in FIG. 5, which is not repeated here.

In addition, the first request may be a POSITIONING INFORMATION REQUEST message, and the first response may be a POSITIONING INFORMATION RESPONSE.

As an optional implementation, the information related to the second target configuration includes at least one of the following:
a valid area of the second target configuration; and
the second target configuration.

The configuration updating method executed by the first network-side device provided in this embodiment of this application matches the configuration updating method executed by the terminal in the embodiment of the method shown in FIG. 5, so as to jointly implement that the terminal can obtain the updated second target configuration by initiating the RRC connection resumption procedure and the RACH procedure when the first target configuration of the terminal becomes invalid.

Refer to FIG. 7. A configuration updating method is provided in an embodiment of this application, and may be executed by an LMF.

As shown in FIG. 7, the configuration updating method executed by the LMF may include the following steps.

Step 701: The LMF receives first information from a terminal or a first network-side device, where the first information carries an indication or request for target configuration update, and a first target configuration of the terminal is invalid.

Step 702: The LMF sends second information to the first network-side device, where the second information includes information related to a valid second target configuration.

The LMF, the first network-side device, the first information, the first target configuration, and the information related to the second target configuration in this embodiment of this application have the same meanings and functions as the LMF, the first network-side device, the first information, the first target configuration, and the information related to the second target configuration in the method embodiment shown in FIG. 5, which are not repeated here.

In this embodiment of this application, in the RRC connection resumption procedure and the corresponding RACH procedure that are initiated by the terminal, if the first network-side device has not obtained context information of the terminal from a second network-side device, the terminal enters an RRC connected state based on an RRC resume request message sent by the first network-side device, where the first information and the second information are information exchanged when the terminal is in the RRC connected state.

In an implementation, the LMF receiving the first information from the terminal may be the LMF receiving a first LPP message from the terminal, where the first LPP message carries the first information.

In an implementation, the LMF receiving the first information from the first network-side device may be that the terminal sends a first RRC message carrying the first information to the first network-side device, and the first network-side device sends an NRPPa message carrying the first information to the LMF based on the first RRC message.

Optionally, at least one of the first RRC message, the first LPP message, and the NRPPa message may be an enhanced message in the related art, or a newly defined message, which is not repeated here.

It should be noted that, as described in the method embodiment shown in FIG. 5 or FIG. 6, after the terminal sends the first RRC message carrying the first information to the first network-side device, if the first network-side device can determine the second information, the first network-side device sends the determined second information to the terminal and the LMF, that is, the first network-side device no longer sends the first information to the LMF.

In an implementation, the second information includes information related to a valid second target configuration, and may include specific content of the second target configuration, a valid area of the second target configuration, and assistance information of a service corresponding to the second target configuration. For example, when the second target configuration is an SRS configuration, the assistance information of the service corresponding to the second target configuration may be the terminal positioning related information.

As an optional implementation, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

As an optional implementation, the target configuration update indication or request includes:
a cause for invalidity of the first target configuration.

As an optional implementation, the first information is carried in at least one of the following:
a second RRC message from the first network-side device; and
a first long term evolution positioning protocol LPP message from the terminal.

As an optional implementation, the first RRC message includes at least one of the following:
an enhanced RRC message; and
a newly defined RRC message.

As an optional implementation, the first LPP message includes at least one of the following:
an enhanced LPP message; and
a newly defined LPP message.

In this embodiment of this application, in the RRC connection resumption procedure and the corresponding RACH procedure that are initiated by the terminal, if the first network-side device has not obtained context information of the terminal from a second network-side device, the terminal enters an RRC connected state based on an RRC resume request message sent by the first network-side device, and then the terminal exchanges the first information and the second information with the first network-side device or the LMF in the RRC connected state, so that the terminal can obtain a valid second target configuration.

To facilitate understanding on the configuration updating method provided in this embodiment of this application, FIG. 8 is used as an example for describing an interaction procedure between the terminal, the first network-side device, the second network-side device, and the LMF in the process of updating the SRS configuration of the terminal.

In the embodiment shown in FIG. 8, the terminal is UE, the first network-side device is a new base station, and the second network-side device is the last serving base station of the terminal.

### Embodiment 1

As shown in FIG. 8, the configuration updating method in this embodiment of this application may include the following steps.
1. The UE sends an RRC connection resume request message to the new base station.
2. After the new base station receives the RRC connection resume request message sent by the UE, the new base station sends a RETRIEVE UE CONTEXT REQUEST message to the last serving base station of the UE to request the UE context (context) information of the UE.
3b. After the old base station receives the RETRIEVE UE CONTEXT REQUEST message sent by the new base station, when the old base station can retrieve and verify the UE context data and determines to provide the UE context to the new base station, it can send a RETRIEVE UE CONTEXT RESPONSE message to the new base station, where the RETRIEVE UE CONTEXT RESPONSE message contains the UE context.
4b. The new base station determines an updated SRS configuration based on positioning-related content in the UE context, and sends an RRCRelease with SuspendConfig message with the updated SRS configuration to the UE.

### Embodiment 2

As shown in FIG. 8, the configuration updating method in this embodiment of this application may include the following steps.
1. The UE sends an RRC connection resume request message to the new base station.
2. After the new base station receives the RRC connection resume request message sent by the UE, the new base station sends a RETRIEVE UE CONTEXT REQUEST message to the last serving base station of the UE to request the UE context (context) information of the UE.
3a. After the old base station receives the RETRIEVE UE CONTEXT REQUEST message sent by the new base station, when the old base station cannot retrieve or verify the UE context data or determines not to provide the UE context to the new base station, it may send a RETRIEVE UE CONTEXT FAILURE message to the new base station, where the RETRIEVE UE CONTEXT FAILURE does not include the UE context.
4a. The new base station sends an RRCSetup message not carrying the updated SRS configuration to the UE.
5a. The UE enters the RRC connected state and sends the first information carrying the SRS configuration update indication or request. For example, the UE sends a first RRC message containing the first information to the base station, so that the base station can update the SRS configuration accordingly or request or indicate to the LMF to update the SRS configuration; or the UE may directly send a first LPP message containing the first information to the LMF, so that the LMF can update the SRS configuration accordingly.

It should be noted that in this step, when the base station updates the SRS configuration, the base station may send the updated SRS configuration to the UE and report the updated SRS configuration to the LMF.

6a. After receiving the message of step 5a (such as the LPP message sent by the UE or the NRPPa message sent by the base station), the LMF sends a POSITIONING INFORMATION REQUEST message to the base station based on related information of the UE (such as a LPHAP requirement, UE capability, or a previous SRS configuration of the UE).

The "POSITIONING INFORMATION REQUEST message" includes at least one of the following:
information related to the SRS configuration; and
positioning related information.

The positioning related information may include at least one of the following:
uplink positioning;
a state of the UE during positioning; and
a positioning requirement (such as LPHAP), where the requirement is used to suggest that the base station release the UE to RRC_INACTIVE state.

7a. After receiving the message of step 6a, the base station determines the updated SRS configuration of the UE, sends information related to the updated SRS configuration to the UE, and sends a POSITIONING INFORMATION RESPONSE message carrying UL information to the LMF, where the POSITIONING INFORMATION RESPONSE message may carry the information related to the updated SRS configuration.

The execution subject of the configuration updating method provided in the embodiments of this application may be a configuration updating apparatus. In the embodiments of this application, the configuration updating apparatus provided in the embodiments of this application is described by using the configuration updating method being executed by the configuration updating apparatus as an example.

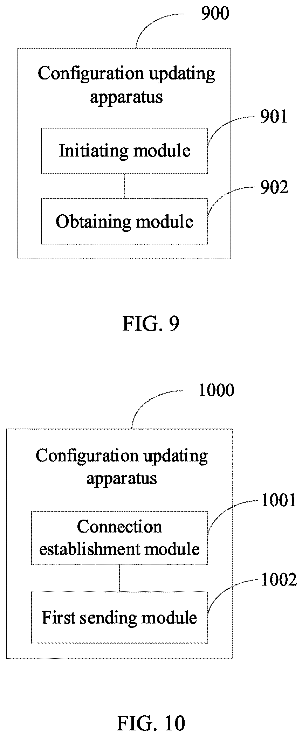

Refer to FIG. 9. A configuration updating apparatus provided in an embodiment of this application may be an apparatus in a terminal. As shown in FIG. 9, the configuration updating apparatus 900 may include the following modules:
an initiating module 901, configured to: when a first target configuration is invalid, initiate a radio resource control RRC connection resumption procedure and a corresponding random access channel RACH procedure to a first network-side device; and
an obtaining module 902, configured to obtain a valid second target configuration based on the RRC connection resumption procedure and the RACH procedure.

Optionally, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

Optionally, the first target configuration is a first SRS configuration valid in the first area, and that the first target configuration becomes invalid includes any one of the following:
the terminal is not included in the first area; and
a first event occurs on the terminal within the first area, where the first event is an event that occurs when the terminal is within the first area and causes the first SRS configuration to become invalid.

Optionally, the first event includes at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, where the first cell is a cell reselected by the terminal within the first area.

Optionally, when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration includes at least one of the following:
determining that the SRS exceeds a range of the initial UL BWP of the first cell; and
determining that the parameter set of the SRS is different from that of the initial UL BWP of the first cell.

Optionally, when the terminal has a capability to support SRS transmission within the initial UL BWP and SRS transmission outside the initial UL BWP, the determining that an initial uplink bandwidth part UL BWP or bearer in a first cell mismatches the first SRS configuration includes at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to include bandwidths of control resource set CORESET #0 and synchronization signal and physical broadcast channel block SSB, but the frequency domain range of the SRS after cell reselection does not include the bandwidths of CORESET #0 and SSB.

Optionally, the determining that an initial uplink bandwidth part UL BWP or bearer in a first cell mismatches the first SRS configuration includes:
determining that the first cell and a second cell are inter-frequency cells, where the first cell is a cell reselected by the terminal within the first area, and the second cell is an original cell of the terminal before cell reselection within the first area.

Optionally, an initiation condition for the RRC connection resumption procedure is an access stratum AS initiation condition, and the AS initiation condition includes at least one of the following:
a mobile-originated signaling transmission occurring at the RRC layer; and
update of the first target configuration.

Optionally, the RRC connection resumption procedure is initiated based on an RRC resume request message, and a resume cause carried in the RRC resume request message includes at least one of the following:
update of the first target configuration; and
a cause for invalidity of the first target configuration.

Optionally, an initiation condition for the RACH procedure includes at least one of the following:
a positioning purpose during a non-RRC connected state requires a random access procedure.

Optionally, the initiating module 901 includes:
a first sending unit, configured to send an RRC resume request message to the first network-side device when the first target configuration is invalid; and
a connection unit, configured to enter an RRC connected state based on a response message to the RRC resume request message; and

The obtaining module 902 includes:
a second sending unit, configured to send first information in the RRC connected state, where the first information carries an indication or request for target configuration update.

Optionally, the target configuration update indication or request includes:
a cause for invalidity of the first target configuration.

Optionally, the first information is carried in at least one of the following messages:
a first RRC message that is sent by the terminal to the first network-side device; and
a first long term evolution positioning protocol LPP message that is sent by the terminal to a location management function LMF.

Optionally, the first RRC message includes at least one of the following:
an enhanced RRC message; and
a newly defined RRC message.

Optionally, the first LPP message includes at least one of the following:
an enhanced LPP message; and
a newly defined LPP message.

Optionally, the obtaining module 902 includes:
a first receiving unit, configured to receive information related to the second target configuration from the first network-side device based on the RRC connection resumption procedure and the RACH procedure, where the information related to the second target configuration includes at least one of the following:
a valid area of the second target configuration; and
the second target configuration.

The configuration updating apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The configuration updating apparatus 900 provided in this embodiment of this application can implement the processes implemented in the method embodiment in FIG. 5, with the same technical effects achieved. To avoid repetition, details are not described herein again.

Refer to FIG. 10. A configuration updating apparatus provided in an embodiment of this application may be an apparatus in a first network-side device. As shown in FIG. 10, the configuration updating apparatus 1000 may include the following modules:
a connection establishment module 1001, configured to establish an RRC connection to a terminal based on a radio resource control RRC connection resumption procedure and a corresponding random access channel RACH procedure that are initiated by the terminal, where a first target configuration of the terminal is invalid; and
a first sending module 1002, configured to send second information to the terminal, where the second information includes information related to a valid second target configuration.

Optionally, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

Optionally, the first target configuration is a first SRS configuration valid in the first area, and that the first target configuration becomes invalid includes any one of the following:
the terminal is not included in the first area; and
a first event occurs on the terminal within the first area, where the first event is an event that occurs when the terminal is within the first area and causes the first SRS configuration to become invalid.

Optionally, the first event includes at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, where the first cell is a cell reselected by the terminal within the first area.

Optionally, when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration includes at least one of the following:
determining that the SRS exceeds a range of the initial UL BWP of the first cell; and
determining that the parameter set of the SRS is different from that of the initial UL BWP of the first cell.

Optionally, when the terminal has a capability to support SRS transmission within the initial UL BWP and SRS transmission outside the initial UL BWP, the determining that an initial uplink bandwidth part UL BWP or bearer in a first cell mismatches the first SRS configuration includes at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to include bandwidths of control resource set CORESET #0 and synchronization signal and physical broadcast channel block SSB, but the frequency domain range of the SRS after cell reselection does not include the bandwidths of CORESET #0 and SSB.

Optionally, the determining that an initial uplink bandwidth part UL BWP or bearer in a first cell mismatches the first SRS configuration includes:
determining that the first cell and a second cell are inter-frequency cells, where the first cell is a cell reselected by the terminal within the first area, and the second cell is an original cell of the terminal before cell reselection within the first area.

Optionally, the RRC connection resumption procedure is initiated based on an RRC resume request message, and a resume cause carried in the RRC resume request message includes at least one of the following:
update of the first target configuration; and
a cause for invalidity of the first target configuration.

Optionally, the configuration updating apparatus 1000 further includes:
a first determining module, configured to: when the first network-side device obtains context information of the terminal from a second network-side device during the RRC connection resumption procedure initiated by the terminal, determine an updated second target configuration based on the context information of the terminal, where the second information includes the updated second target configuration.

Optionally, the configuration updating apparatus 1000 further includes:
a third sending module, configured to: when the first network-side device has not obtained context information of the terminal during the RRC connection resumption procedure initiated by the terminal, send an RRC resume request message to the terminal.

The RRC resume request message is used to resume an RRC connected state of the terminal, so that the terminal in the RRC connected state sends first information to the first network-side device or an LMF, where the first information carries an indication or request for target configuration update.

Optionally, when the first network-side device receives the first information from the terminal;
the configuration updating apparatus 1000 further includes:
an execution module, configured to perform at least one of the following based on the first information:
determining the second information, where a response message to the first information carries the second information; and
sending the first information to the LMF.

Optionally, the target configuration update indication or request includes:
a cause for invalidity of the first target configuration.

Optionally, the first information is carried in a first RRC message from the terminal.

Optionally, the first RRC message includes at least one of the following:
an enhanced RRC message; and
a newly defined RRC message.

Optionally, the information related to the second target configuration includes at least one of the following:
a valid area of the second target configuration; and
the second target configuration.

The configuration updating apparatus 1000 provided in this embodiment of this application can implement the processes implemented in the method embodiment in FIG. 6, with the same technical effects achieved. To avoid repetition, details are not described herein again.

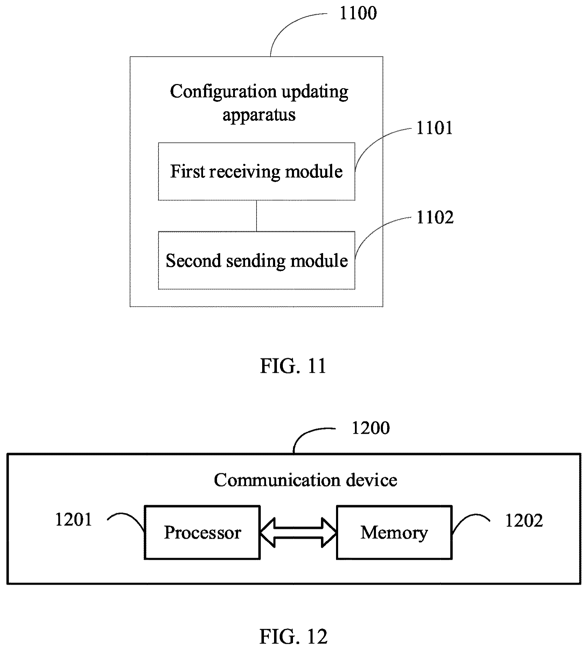

Refer to FIG. 11. A configuration updating apparatus provided in an embodiment of this application may be an apparatus in an LMF. As shown in FIG. 11, the configuration updating apparatus 1100 may include the following modules:
a first receiving module 1101, configured to receive first information from a terminal or a first network-side device, where the first information carries an indication or request for target configuration update, and a first target configuration of the terminal is invalid; and
a second sending module 1102, configured to send second information to the first network-side device, where the second information includes information related to a valid second target configuration.

Optionally, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

Optionally, the target configuration update indication or request includes:
a cause for invalidity of the first target configuration.

Optionally, the first information is carried in at least one of the following:
a second RRC message from the first network-side device; and
a first long term evolution positioning protocol LPP message from the terminal.

Optionally, the first RRC message includes at least one of the following:
an enhanced RRC message; and
a newly defined RRC message.

Optionally, the first LPP message includes at least one of the following:
an enhanced LPP message; and
a newly defined LPP message.

The configuration updating apparatus 1100 provided in this embodiment of this application can implement the processes implemented in the method embodiment in FIG. 7, with the same technical effects achieved. To avoid repetition, details are not described herein again.

Optionally, as shown in FIG. 12, an embodiment of this application further provides a communication device 1200, including a processor 1201 and a memory 1202. A program or instructions capable of running on the processor 1201 are stored in the memory 1202. For example, when the communication device 1200 is a terminal and when the program or the instructions are executed by the processor 1201, the steps of the foregoing embodiments of the method shown in FIG. 5 are implemented, with the same technical effects achieved. When the communication device 1200 is a first network-side device, and the program or instructions are executed by the processor 1201, the steps of the foregoing embodiments of the method shown in FIG. 6 are implemented, with the same technical effects achieved. When the communication device 1200 is an LMF, and the program or instructions are executed by the processor 1201, the steps of the foregoing embodiments of the method shown in FIG. 7 are implemented, with the same technical effects achieved. To avoid repetition, details are not described herein again.

An embodiment of this application further provides a terminal, including a processor and a communication interface, where the processor is configured to: when a first target configuration is invalid, initiate a radio resource control RRC connection resumption procedure and a corresponding random access channel RACH procedure to a first network-side device; and the communication interface is configured to obtain a valid second target configuration based on the RRC connection resumption procedure and the RACH procedure.

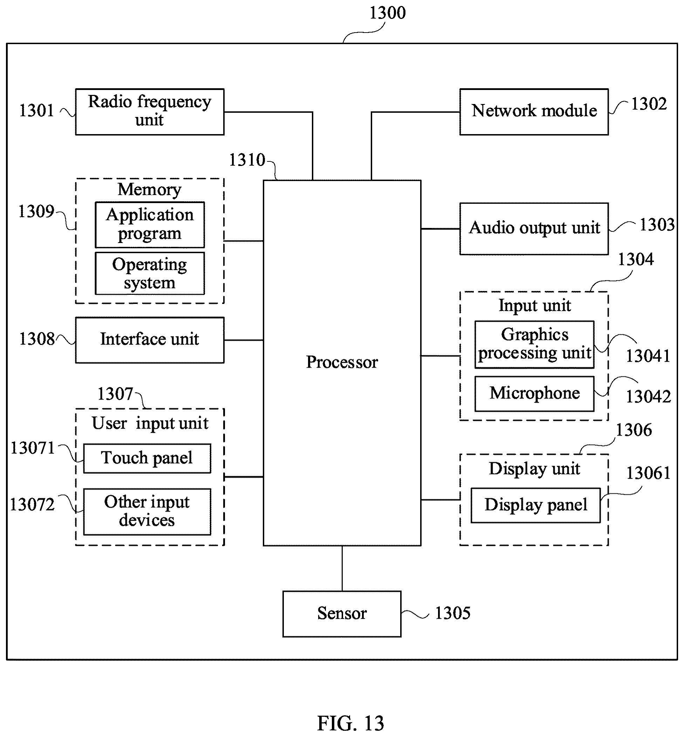

The terminal embodiment corresponds to the foregoing terminal side method embodiment, and the implementation processes and implementations of the foregoing method embodiments can be applied to the terminal embodiments, with the same technical effects achieved. Specifically, FIG. 13 is a schematic diagram of a hardware structure of a terminal implementing an embodiment of this application.

The terminal 1300 includes but is not limited to at least part of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art can understand that the terminal 1300 may further include a power supply (for example, a battery) supplying power to the components, and the power supply may be logically connected to the processor 1310 through a power management system. In this way, functions such as charge management, discharge management, and power consumption management are implemented by using the power management system. The structure of the terminal shown in FIG. 13 does not constitute any limitation on the terminal. The terminal may include more or fewer components than shown in the figure, or a combination of some components, or the components disposed differently. Details are not described herein again.

It can be understood that in this embodiment of this application, the input unit 1304 may include a graphics processing unit (Graphics Processing Unit, GPU) 13041 and a microphone 13042. The graphics processing unit 13041 processes image data of a still picture or video obtained by an image capture apparatus (such as a camera) in a video capture mode or an image capture mode. The display unit 1306 may include a display panel 13061, and the display panel 13061 may be configured in a form of a liquid crystal display, an organic light-emitting diode, and the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1301 sends the downlink data to the processor 1310 for processing; and the radio frequency unit 1301 also sends uplink data to the network-side device. Generally, the radio frequency unit 1301 includes, but is not limited to, an antenna, an amplifier, a transceiver, a coupler, a low noise amplifier, a duplexer, and the like.

The memory 1309 may be configured to store software programs or instructions and various data. The memory 1309 may mainly include a first storage area for storing programs or instructions and a second storage area for storing data, where the first storage area may store an operating system, an application program or instructions required by at least one function (for example, an audio playing function and an image playing function), and the like. Further, the memory 1309 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1309 described in this embodiment this application includes but is not limited to these and any other suitable types of memories.

The processor 1310 may include one or more processing units. Optionally, the processor 1310 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 1310.

The processor 1310 is configured to: when a first target configuration is invalid, initiate a radio resource control RRC connection resumption procedure and a corresponding random access channel RACH procedure to a first network-side device; and

The radio frequency unit 1301 is configured to obtain a valid second target configuration based on the RRC connection resumption procedure and the RACH procedure.

Optionally, the first target configuration includes at least one of the following:
a configuration of a first target signal, where the first target signal is a signal sent by the terminal in an RRC inactive state; and
a configuration valid in a first area;
   or
the second target configuration includes at least one of the following:
   a configuration of a second target signal, where the second target signal is a signal sent by the terminal in an RRC inactive state; and
   a configuration valid in a second area.

The first target signal is the same as the second target signal.

Optionally, the first target configuration is a first SRS configuration valid in the first area, and that the first target configuration becomes invalid includes any one of the following:
the terminal is not included in the first area; and
a first event occurs on the terminal within the first area, where the first event is an event that occurs when the terminal is within the first area and causes the first SRS configuration to become invalid.

Optionally, the first event includes at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, where the first cell is a cell reselected by the terminal within the first area.

Optionally, when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration includes at least one of the following:
determining that the SRS exceeds a range of the initial UL BWP of the first cell; and
determining that the parameter set of the SRS is different from that of the initial UL BWP of the first cell.

Optionally, when the terminal has a capability to support SRS transmission within the initial UL BWP and SRS transmission outside the initial UL BWP, the determining that an initial uplink bandwidth part UL BWP or bearer in a first cell mismatches the first SRS configuration includes at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to include bandwidths of control resource set CORESET #0 and synchronization signal and physical broadcast channel block SSB, but the frequency domain range of the SRS after cell reselection does not include the bandwidths of CORESET #0 and SSB.

Optionally, the determining that an initial uplink bandwidth part UL BWP or bearer in a first cell mismatches the first SRS configuration includes:
determining that the first cell and a second cell are inter-frequency cells, where the first cell is a cell reselected by the terminal within the first area, and the second cell is an original cell of the terminal before cell reselection within the first area.

Optionally, an initiation condition for the RRC connection resumption procedure is an access stratum AS initiation condition, and the AS initiation condition includes at least one of the following:
a mobile-originated signaling transmission occurring at the RRC layer; and
update of the first target configuration.

Optionally, the RRC connection resumption procedure is initiated based on an RRC resume request message, and a resume cause carried in the RRC resume request message includes at least one of the following:
update of the first target configuration; and
a cause for invalidity of the first target configuration.

Optionally, an initiation condition for the RACH procedure includes at least one of the following:
a positioning purpose during a non-RRC connected state requires a random access procedure.

Optionally, that the processor 1310 initiates a radio resource control RRC connection resumption procedure and a corresponding random access channel RACH procedure when a first target configuration is invalid includes:
the processor 1310 controls the radio frequency unit 1301 to send an RRC resume request message to the first network-side device when the first target configuration is invalid; and
the radio frequency unit 1301 enters an RRC connected state based on a response message to the RRC resume request message.

That the radio frequency unit 1301 obtains a valid second target configuration based on the RRC connection resumption procedure and the RACH procedure includes:
the radio frequency unit 1301 sends first information in the RRC connected state, where the first information carries an indication or request for target configuration update.

Optionally, the target configuration update indication or request includes:
a cause for invalidity of the first target configuration.

Optionally, the first information is carried in at least one of the following messages:
a first RRC message that is sent by the terminal to the first network-side device; and
a first long term evolution positioning protocol LPP message that is sent by the terminal to a location management function LMF.

Optionally, the first RRC message includes at least one of the following:
an enhanced RRC message; and
a newly defined RRC message.

Optionally, the first LPP message includes at least one of the following:
an enhanced LPP message; and
a newly defined LPP message.

Optionally, that the radio frequency unit 1301 obtains a valid second target configuration based on the RRC connection resumption procedure and the RACH procedure includes:
the radio frequency unit 1301 receives information related to the second target configuration from the first network-side device based on the RRC connection resumption procedure and the RACH procedure, where the information related to the second target configuration includes at least one of the following:
a valid area of the second target configuration; and
the second target configuration.

The terminal 1300 provided in this embodiment of this application can implement the method executed by the modules shown in FIG. 9, with the same beneficial effects achieved as the configuration updating apparatus 900 shown in FIG. 9. To avoid repetition, details are not described herein again.

An embodiment of this application further provides a network-side device, including a processor and a communication interface.

In an implementation, when the network-side device is a first network-side device, the communication interface is configured to establish an RRC connection to a terminal based on a radio resource control RRC connection resumption procedure and a corresponding random access channel RACH procedure that are initiated by the terminal, where a first target configuration of the terminal is invalid; and the communication interface is further configured to send second information to the terminal, where the second information includes information related to a valid second target configuration.

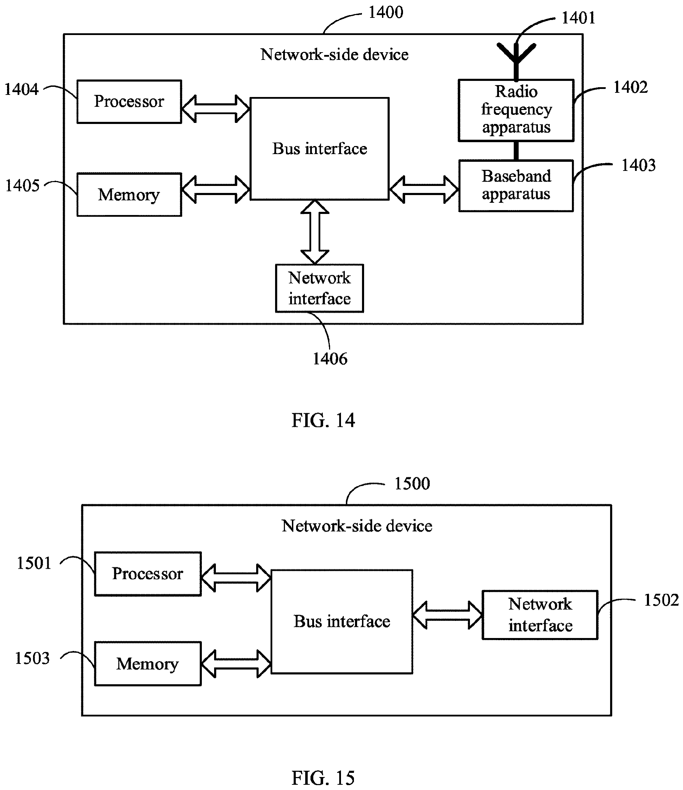

Specifically, an embodiment of this application further provides a network-side device. As shown in FIG. 14, the network-side device 1400 includes an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information by using the antenna 1401, and sends the received information to the baseband apparatus 1403 for processing. In a downlink direction, the baseband apparatus 1403 processes to-be-sent information, and sends the information to the radio frequency apparatus 1402; and the radio frequency apparatus 1402 processes the received information and then sends the information out by using the antenna 1401.

The method performed by the network-side device in the foregoing embodiment may be implemented in the baseband apparatus 1403, and the baseband apparatus 1403 includes a baseband processor.

The baseband apparatus 1403 may include, for example, at least one baseband board, where a plurality of chips are disposed on the baseband board. As shown in FIG. 14, one of the chips is, for example, the baseband processor, and connected to the memory 1405 through a bus interface, to invoke the program in the memory 1405 to perform the operations of the network device shown in the foregoing method embodiment.

The network-side device may further include a network interface 1406, where the interface is, for example, a common public radio interface (common public radio interface, CPRI).

Specifically, the network-side device 1400 according to this embodiment of this application further includes instructions or programs stored in the memory 1405 and capable of running on the processor 1404, and the processor 1404 calls the instructions or programs in the memory 1405 to execute the methods performed by the modules shown in FIG. 10, with the same technical effects achieved. To avoid repetition, details are not described herein again.

In another implementation, when the network-side device is an LMF, the communication interface is configured to receive first information from a terminal or a first network-side device, where the first information carries an indication or request for target configuration update, and a first target configuration of the terminal is invalid; and the communication interface is further configured to send second information to the first network-side device, where the second information includes information related to a valid second target configuration.

Specifically, an embodiment of this application further provides a network-side device. As shown in FIG. 15, the network-side device 1500 includes a processor 1501, a network interface 1502, and a memory 1503. The network interface 1502 is, for example, a common public radio interface (Common Public Radio Interface, CPRI).

Specifically, the network-side device 1500 according to this embodiment of this application further includes instructions or programs stored in the memory 1503 and capable of running on the processor 1501, and the processor 1501 calls the instructions or programs in the memory 1503 to execute the methods performed by the modules shown in FIG. 11, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method shown in FIG. 5 or FIG. 6 or FIG. 7 may be implemented, with the same technical effects achieved. To avoid repetition, details are not described herein again.

The processor is the processor in the terminal or the network-side device in the foregoing embodiment. The readable storage medium includes computer readable storage medium, such as computer read-only memory ROM, random access memory RAM, magnetic disk or optical disc, etc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions, so as to implement the processes of the method embodiment shown in FIG. 5 or FIG. 6 or FIG. 7, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes shown in FIG. 5 or FIG. 6 or FIG. 7 and the foregoing method embodiments, with the same technical effects achieved. To avoid repetition, details are not repeated herein.

An embodiment of this application further provides a communication system, including a terminal and a network-side device, where the terminal can be configured to execute the steps of the method shown in FIG. 5, and the network-side device can be configured to execute the steps of the method shown in FIG. 6 or FIG. 7.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. A configuration updating method, comprising:
initiating, by a terminal, when a first target configuration is invalid, a radio resource control RRC connection resumption procedure and a corresponding random access channel RACH procedure to a first network-side device; and
obtaining, by the terminal, a valid second target configuration based on the RRC connection resumption procedure and the RACH procedure.

2. The method according to claim 1, wherein the first target configuration comprises at least one of the following:
a configuration of a first target signal, wherein the first target signal is a signal sent by the terminal in an RRC inactive state; and
a configuration valid in a first area;
or
the second target configuration comprises at least one of the following:
a configuration of a second target signal, wherein the second target signal is a signal sent by the terminal in an RRC inactive state; and
a configuration valid in a second area; wherein
the first target signal is the same as the second target signal.

3. The method according to claim 2, wherein the first target configuration is a first SRS configuration valid in the first area, and that the first target configuration becomes invalid comprises any one of the following:
the terminal is not included in the first area; and
a first event occurs on the terminal within the first area, wherein the first event is an event that occurs when the terminal is within the first area and causes the first SRS configuration to become invalid.

4. The method according to claim 3, wherein the first event comprises at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, wherein the first cell is a cell reselected by the terminal within the first area.

5. The method according to claim 4, wherein when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration comprises at least one of the following:
determining that the SRS exceeds a range of the initial UL BWP of the first cell; and
determining that the parameter set of the SRS is different from that of the initial UL BWP of the first cell.

6. The method according to claim 4, wherein when the terminal has a capability to support SRS transmission within the initial UL BWP and SRS transmission outside the initial UL BWP, the determining that an initial uplink bandwidth part UL BWP or bearer in a first cell mismatches the first SRS configuration comprises at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to comprise bandwidths of control resource set CORESET #0 and synchronization signal and physical broadcast channel block SSB, but the frequency domain range of the SRS after cell reselection does not comprise the bandwidths of CORESET #0 and SSB.

7. The method according to claim 4, wherein the determining that an initial uplink bandwidth part UL BWP or bearer in a first cell mismatches the first SRS configuration comprises:
determining that the first cell and a second cell are inter-frequency cells, wherein the first cell is a cell reselected by the terminal within the first area, and the second cell is an original cell of the terminal before cell reselection within the first area.

8. The method according to any one of claims 1 to 7, wherein an initiation condition for the RRC connection resumption procedure is an access stratum AS initiation condition, and the AS initiation condition comprises at least one of the following:
a mobile-originated signaling transmission occurring at the RRC layer; and
update of the first target configuration.

9. The method according to any one of claims 1 to 7, wherein the RRC connection resumption procedure is initiated based on an RRC resume request message, and a resume cause carried in the RRC resume request message comprises at least one of the following:
update of the first target configuration; and
a cause for invalidity of the first target configuration.

10. The method according to any one of claims 1 to 7, wherein an initiation condition for the RACH procedure comprises at least one of the following:
a positioning purpose during a non-RRC connected state requires a random access procedure.

11. The method according to any one of claims 1 to 7, wherein the initiating, by a terminal, when a first target configuration is invalid, a radio resource control RRC connection resumption procedure and a corresponding random access channel RACH procedure comprises:
sending, by the terminal, an RRC resume request message to the first network-side device when the first target configuration is invalid; and
entering, by the terminal, an RRC connected state based on a response message to the RRC resume request message; and
the obtaining, by the terminal, a valid second target configuration based on the RRC connection resumption procedure and the RACH procedure comprises:
sending, by the terminal, first information in the RRC connected state, wherein the first information carries an indication or request for target configuration update.

12. The method according to claim 11, wherein the target configuration update indication or request comprises:
a cause for invalidity of the first target configuration.

13. The method according to claim 11, wherein the first information is carried in at least one of the following messages:
a first RRC message that is sent by the terminal to the first network-side device; and
a first long term evolution positioning protocol LPP message that is sent by the terminal to a location management function LMF.

14. The method according to claim 13, wherein the first RRC message comprises at least one of the following:
an enhanced RRC message; and
a newly defined RRC message.

15. The method according to claim 13, wherein the first LPP message comprises at least one of the following:
an enhanced LPP message; and
a newly defined LPP message.

16. The method according to any one of claims 1 to 7, wherein the obtaining, by the terminal, a valid second target configuration based on the RRC connection resumption procedure and the RACH procedure comprises:
receiving, by the terminal, information related to the second target configuration from the first network-side device based on the RRC connection resumption procedure and the RACH procedure, wherein the information related to the second target configuration comprises at least one of the following:
a valid area of the second target configuration; and
the second target configuration.

17. A configuration updating method, wherein the method comprises:
establishing, by a first network-side device, an RRC connection to a terminal based on a radio resource control RRC connection resumption procedure and a corresponding random access channel RACH procedure that are initiated by the terminal, wherein a first target configuration of the terminal is invalid; and
sending, by the first network-side device, second information to the terminal, wherein the second information comprises information related to a valid second target configuration.

18. The method according to claim 17, wherein the first target configuration comprises at least one of the following:
a configuration of a first target signal, wherein the first target signal is a signal sent by the terminal in an RRC inactive state; and
a configuration valid in a first area;
or
the second target configuration comprises at least one of the following:
a configuration of a second target signal, wherein the second target signal is a signal sent by the terminal in an RRC inactive state; and
a configuration valid in a second area; wherein
the first target signal is the same as the second target signal.

19. The method according to claim 18, wherein the first target configuration is a first SRS configuration valid in the first area, and that the first target configuration becomes invalid comprises any one of the following:
the terminal is not included in the first area; and
a first event occurs on the terminal within the first area, wherein the first event is an event that occurs when the terminal is within the first area and causes the first SRS configuration to become invalid.

20. The method according to claim 19, wherein the first event comprises at least one of the following:
determining that a spatial relation parameter for an SRS is invalid;
determining that a power control parameter for the SRS is invalid;
determining that a timing advance TA or transmission timing for the SRS is invalid; and
determining that an initial uplink bandwidth part UL BWP or bearer in a first cell mismatches the first SRS configuration, wherein the first cell is a cell reselected by the terminal within the first area.

21. The method according to claim 20, wherein when the terminal has a capability to only support SRS transmission within the initial UL BWP and only support SRSs having a frequency domain range located within the initial UL BWP and having a same parameter set as the initial UL BWP, the determining that an initial uplink bandwidth part UL BWP or bearer in a first cell mismatches the first SRS configuration comprises at least one of the following:
determining that the SRS exceeds a range of the initial UL BWP of the first cell; and
determining that the parameter set of the SRS is different from that of the initial UL BWP of the first cell.

22. The method according to claim 20, wherein when the terminal has a capability to support SRS transmission within the initial UL BWP and SRS transmission outside the initial UL BWP, the determining that an initial uplink bandwidth part UL BWP or bearer in a first cell mismatches the first SRS configuration comprises at least one of the following:
determining that the SRS exceeds a frequency domain range of the first cell;
determining that the parameter set of the SRS exceeds a range of a parameter set supported by the first cell;
determining that SRSs for UE capability restrictions for SRS transmission outside the initial UL BWP have a same parameter set as the initial UL BWP, and the initial UL BWP of the first cell and the SRS have different parameter sets;
determining that SRSs for UE capability restrictions for SRS transmission outside the initial UL BWP have a same center frequency as the initial UL BWP, and the initial UL BWP of the first cell and the SRS have different center frequencies; and
determining that SRSs for UE capability restrictions for SRS transmission outside the initial UL BWP have a frequency domain range that needs to comprise bandwidths of control resource set CORESET #0 and synchronization signal and physical broadcast channel block SSB, but the frequency domain range of the SRS after cell reselection does not comprise the bandwidths of CORESET #0 and SSB.

23. The method according to claim 20, wherein the determining that an initial uplink bandwidth part UL BWP or bearer in a first cell mismatches the first SRS configuration comprises:
determining that the first cell and a second cell are inter-frequency cells, wherein the first cell is a cell reselected by the terminal within the first area, and the second cell is an original cell of the terminal before cell reselection within the first area.

24. The method according to any one of claims 17 to 23, wherein the RRC connection resumption procedure is initiated based on an RRC resume request message, and a resume cause carried in the RRC resume request message comprises at least one of the following:
update of the first target configuration; and
a cause for invalidity of the first target configuration.

25. The method according to any one of claims 17 to 23, wherein the method further comprises:
when the first network-side device obtains context information of the terminal from a second network-side device during the RRC connection resumption procedure initiated by the terminal, determining, by the first network-side device, an updated second target configuration based on the context information of the terminal, wherein the second information comprises the updated second target configuration.

26. The method according to any one of claims 17 to 23, wherein the method further comprises:
when the first network-side device has not obtained context information of the terminal during the RRC connection resumption procedure initiated by the terminal, sending, by the first network-side device, an RRC resume request message to the terminal; wherein
the RRC resume request message is used to resume an RRC connected state of the terminal, so that the terminal in the RRC connected state sends first information to the first network-side device or an LMF, wherein the first information carries an indication or request for target configuration update.

27. The method according to claim 26, wherein when the first network-side device receives the first information from the terminal;
the first network-side device performs at least one of the following based on the first information:
determining the second information, wherein a response message to the first information carries the second information; and
sending the first information to the LMF.

28. The method according to claim 26, wherein the target configuration update indication or request comprises:
a cause for invalidity of the first target configuration.

29. The method according to claim 27, wherein the first information is carried in a first RRC message from the terminal.

30. The method according to claim 29, wherein the first RRC message comprises at least one of the following:
an enhanced RRC message; and
a newly defined RRC message.

31. The method according to any one of claims 17 to 23, wherein the information related to the second target configuration comprises at least one of the following:
a valid area of the second target configuration; and
the second target configuration.

32. A configuration updating method, wherein the method comprises:
receiving, by an LMF, first information from a terminal or a first network-side device, wherein the first information carries an indication or request for target configuration update, and a first target configuration of the terminal is invalid; and
sending, by the LMF, second information to the first network-side device, wherein the second information comprises information related to a valid second target configuration.

33. The method according to claim 32, wherein the first target configuration comprises at least one of the following:
a configuration of a first target signal, wherein the first target signal is a signal sent by the terminal in an RRC inactive state; and
a configuration valid in a first area;
or
the second target configuration comprises at least one of the following:
a configuration of a second target signal, wherein the second target signal is a signal sent by the terminal in an RRC inactive state; and
a configuration valid in a second area; wherein
the first target signal is the same as the second target signal.

34. The method according to claim 32, wherein the target configuration update indication or request comprises:
a cause for invalidity of the first target configuration.

35. The method according to claim 32, wherein the first information is carried in at least one of the following:
a second RRC message from the first network-side device; and
a first long term evolution positioning protocol LPP message from the terminal.

36. The method according to claim 35, wherein the first RRC message comprises at least one of the following:
an enhanced RRC message; and
a newly defined RRC message.

37. The method according to claim 35, wherein the first LPP message comprises at least one of the following:
an enhanced LPP message; and
a newly defined LPP message.

38. A configuration updating apparatus, comprising:
an initiating module, configured to: when a first target configuration is invalid, initiate a radio resource control RRC connection resumption procedure and a corresponding random access channel RACH procedure to a first network-side device; and
an obtaining module, configured to obtain a valid second target configuration based on the RRC connection resumption procedure and the RACH procedure.

39. A configuration updating apparatus, comprising:
a connection establishment module, configured to establish an RRC connection to a terminal based on a radio resource control RRC connection resumption procedure and a corresponding random access channel RACH procedure that are initiated by the terminal, wherein a first target configuration of the terminal is invalid; and
a first sending module, configured to send second information to the terminal, wherein the second information comprises information related to a valid second target configuration.

40. A configuration updating apparatus, comprising:
a first receiving module, configured to receive first information from a terminal or a first network-side device, wherein the first information carries an indication or request for target configuration update, and a first target configuration of the terminal is invalid; and
a second sending module, configured to send second information to the first network-side device, wherein the second information comprises information related to a valid second target configuration.

41. A terminal, comprising a processor and a memory, wherein the memory stores a program or instructions capable of running on the processor, and when the program or instructions are executed by the processor, the steps of the configuration updating method according to any one of claims 1 to 16 are implemented.

42. A network-side device, comprising a processor and a memory, wherein a program or instructions capable of running on the processor are stored in the memory, and when the program or instructions are executed by the processor, the steps of the configuration updating method according to any one of claims 17 to 31 are implemented; or the steps of the configuration updating method according to any one of claims 32 to 37 are implemented.

43. A readable storage medium, wherein the readable storage medium stores a program or instructions, and when the program or instructions are executed by a processor, the steps of the configuration updating method according to any one of claims 1 to 16 are implemented; or the steps of the configuration updating method according to any one of claims 17 to 31 are implemented; or the steps of the configuration updating method according to any one of claims 32 to 37 are implemented.
